# FASCICULE DE BREVET EUROPEEN

(11) **EP 1 935 142 B1**
(45) Date de publication et mention de la délivrance du brevet: **21.12.2011**
(21) Numéro de dépôt: 06808081.1
(22) Date de dépôt: 06.09.2006
(51) Int. Cl.: H04L 12/46, H04M 7/00, H04L 29/12

(54) **Procédé et système pour sécurisation des flux en téléphonie sur IP**
Verfahren und System zum Sichern von IP-Telefonieflüssen
Procedure and system for securing IP telephony flows

(30) Priorité: 06.09.2005 FR 0552691
(43) Date de publication de la demande: 25.06.2008
(73) Titulaire: CheckPhone Technologies, 92100 Boulogne Billancourt (FR)
(72) Inventeur: CALAIS, Benjamin, F-92340 Bourg-La-Reine (FR); KAAS, Gérard, F-78480 Verneuil-sur-Seine (FR)
(74) Mandataire: Feray, Valérie
(86) Numéro de dépôt international: PCT/FR2006/002054
(87) Numéro de publication internationale: WO 2007/028896

(56) Documents cités:
- WO-A-2004/098156
- US-A1- 2002 112 076
- US-A1- 2004 028 058
- US-B1- 6 781 989

## Description

La présente invention se rapporte au domaine des réseaux virtuels VLAN.

Les VLAN ou *Virtual Local-Area Network* (définis entre autres par les normes IEEE 802.1 P/Q) sont des réseaux locaux logiques permettant une division en plusieurs réseaux logiques d'un seul et même réseau local physique qu'il soit filaire ou sans fil. On l'appelle également domaine de *broadcast* (diffusion). Le protocole le plus utilisé pour créer des VLAN est 802.1 Q.

La présente invention concerne plus particulièrement un procédé et une architecture pour sécuriser la séparation des flux de données générées par des applications traditionnelles et des flux voix sur IP (*Internet Protocol),* par exemple la téléphonie ou la vidéophonie sur IP.

On appelle désormais indifféremment « données/flux de téléphonie », « données/flux voix », l'ensemble des données numériques générées pour des applications de téléphonie ou voix sur IP. On appelle également « VLAN voix » un réseau virtuel VLAN utilisé pour le transport de ces données voix.

De même, l'utilisation des termes « données Data » ou « data » réfèrent aux autres données numériques informatiques, données classiques par opposition aux données voix, générées par l'ordinateur, par exemple les données numériques lors de la consultation de pages Web. On appelle également « VLAN de données » un réseau virtuel VLAN utilisé pour le transport de ces données Data, par opposition au « VLAN voix ».

Le terme « données » (utilisé seul) regroupe à la fois les données voix et les données Data.

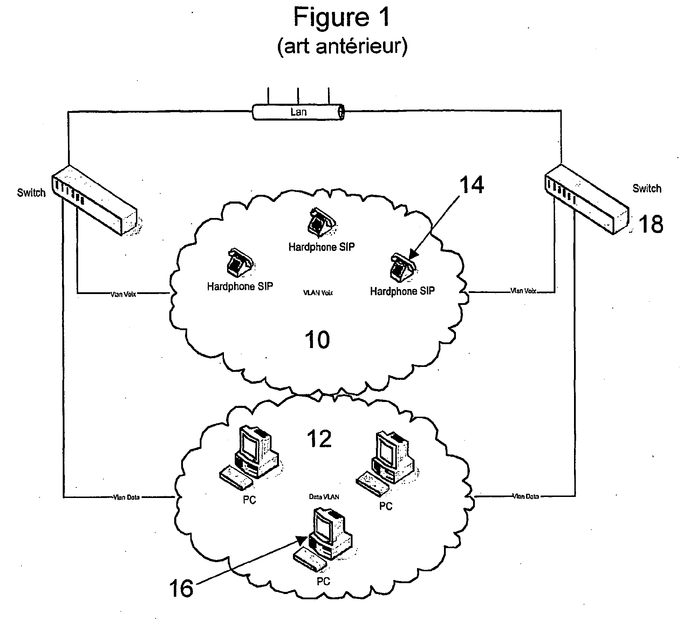

A l'heure actuelle la typologie des réseaux qui sont déployés avec des offres de voix sur IP instaure une différentiation des flux de téléphonie et de données (data) grâce à l'utilisation des réseaux virtuels VLAN et d'équipements associés : VLAN (10) pour la téléphonie sur IP et VLAN (12) pour les données Data réseaux classiques, en référence à la figure 1. Cette typologie met en oeuvre des téléphones IP (14) physiquement distincts des postes informatiques (16) traditionnels. La gestion des VLAN est réalisée par des commutateurs (18).

Cette différentiation de flux permet de garantir la non intrusion des données de la téléphonie dans le domaine data et inversement. Cela permet également de gérer différents modes d'attribution des adresses IP entre les deux réseaux (IP fixes du côté données Data et ordinateurs 16, et DHCP *(Dynamic Host Configuration Protocol)* pour les téléphones IP hardware 14 *(hard phones*)).

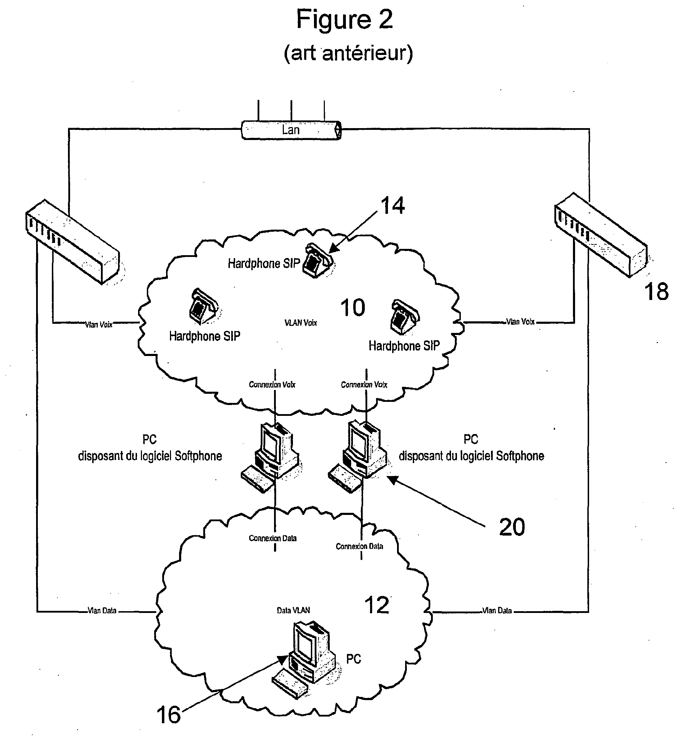

Dans le cadre du déploiement des nouvelles offres de téléphonie sur IP, les entreprises souhaitent réduire les coûts en utilisant des *softphones* (téléphones logiciels, représentés en référence 20 sur la figure 2) en lieu et place ou en association de *hard phones* 14. Cela permet une réduction sensible des coûts car la plupart des postes de travail en entreprise ont déjà un ordinateur. Par conséquent, il ne sera plus nécessaire d'investir dans des hard phones coûteux.

Le problème d'une telle installation est la sécurisation des flux sortants et entrants sur le PC *softphone.* En effet, celui-ci doit pouvoir émettre sur les deux VLAN (voix 10 et données 12) pour assurer cette sécurisation.

Ceci pose un problème fondamental en termes d'isolation des flux téléphoniques et informatiques (données Data), car la seule solution technique universelle connue permettant de faire venir deux VLAN sur une seule machine consiste à doubler les cartes réseau sur la machine et à mettre chaque interface réseau sur un des deux VLAN comme présenté dans la figure 2. Une solution similaire est décrite par WO 2004098156.

La présente invention a pour but de permettre l'utilisation de *softphones* tout en conservant, sur une seule interface réseau, la séparation des réseaux virtuels voix et données. En effet, ce critère est nécessaire à la fois pour la sécurité du système mais également pour le fonctionnement des applications voix qui requièrent des ressources réseaux spécifiques (débit, qualité de service ...)

Dans l'art antérieur illustré par la demande de brevet japonais JP2005/012484, le rôle de définition des appartenances des flux est délégué aux commutateurs (*switches* sur lesquels sont connectés les ordinateurs) du réseau. Un commutateur choisit à quel réseau virtuel VLAN il affecte le flux en fonction de sa configuration (généralement il s'agit d'une affectation de VLAN par port réseau et par adresse MAC - Media Access Control - d'origine du paquet). Cette configuration est figée dans le commutateur, à savoir qu'à un port d'entrée du commutateur, c'est-à-dire un ordinateur, correspond un numéro d'identification de VLAN. L'inconvénient de cette méthode réside dans la nécessité de disposer d'un commutateur et dans l'impossibilité d'utiliser deux VLAN sur un seul port d'un commutateur, c'est-à-dire sur une même interface réseau d'un ordinateur.

On connaît également, par le brevet US 6 781 989, un procédé permettant d'étendre une ligne téléphonique traditionnelle au concept des réseaux virtuels VLAN. Pour ce faire, un unique numéro VLAN est associé à chaque noeud VLAN et le marquage VLAN des données à émettre est réalisé au niveau de la couche réseau (n°3 du modèle OSI) par les pilotes de cartes réseaux. Un inconvénient de cette solution réside dans le fait qu'elle ne permet pas la gestion, par un même équipement, de deux VLAN à partir d'une même interface réseau. Cette solution se différencie également de la présente invention en ce qu'elle ne tient pas compte de l'allocation dynamique des ports de communication, ce qui représente une problématique réelle pour, par exemple, la téléphonie sur IP puisqu'il devient alors difficile d'associer, de façon certaine, un port de communication avec un VLAN.

On connaît également des cartes réseau pour serveur développées pour réaliser l'encapsulation VLAN selon la norme « IEEE 802.1 Q » pour plusieurs réseaux virtuels VLAN. Ces cartes, par exemple la carte 3Com 3C996B-T, requièrent une intelligence de traitement limitée puisqu'elles affectent à la réponse d'une requête le même numéro d'identification de VLAN que celui de la requête entrante. Ainsi, elles ne réalisent que des traitements au niveau de la couche liaison de données (couche OSI n°2) voire de la couche réseau (couche OSI n°3) dans certains cas sans aucune interaction avec les couches supérieures. Outre ces caractéristiques limitatives, ces cartes présentent l'inconvénient d'être onéreuses au regard des cartes réseau traditionnelles. Le coût d'acquisition peut varier du simple (carte traditionnelle) au quintuple (carte 3Com 3C996B-T).

Aucune de ces solutions n'est satisfaisante pour offrir, à coût réduit, une solution de sécurisation des flux voix et données dans une utilisation de téléphonie sur IP au travers d'une seule interface physique réseau d'un ordinateur.

La présente invention entend remédier aux inconvénients de l'art antérieur en proposant une solution consistant à déterminer et à marquer les appartenances des flux aux différents réseaux virtuels depuis la machine. Il devient ainsi possible de gérer les applications voix sur le réseau dédié à cet usage en deux VLAN distincts et en n'utilisant qu'une seule carte réseau traditionnelle.

Un avantage notable de la présente invention réside dans la gestion de l'allocation dynamique des ports de communication pour affecter sans erreur les paquets sur le bon VLAN associé. L'invention a donc pour objet un procédé conforme à la revendication 1 et un système conforme à la revendication 10.

Cette solution permet de marquer, à moindres coûts (uniquement un logiciel) et sans difficulté, des trames selon le VLAN utilisé. Les moyens Proxy présentent en outre une intelligence de traitement qui fournit un grand avantage de la solution par rapport aux solutions connues, car les moyens logiciels de Proxy permettent de mettre en oeuvre toute sorte de politiques de répartition des données sur les VLAN en fonction des données et des encapsulations des couches hautes du modèle OSI.

Dans un mode de réalisation, le système comprend, en outre, une base de données associant des données de marquage VLAN à des ports réseau de communication, cette base de données étant modifiée par les moyens de Proxy en fonction de ladite analyse et étant consultée par les moyens de marquage pour déterminer les informations de marquage desdites données numériques.

Particulièrement, le système comprend, en outre, une base de données associant des protocoles et des informations VLAN de marquage, cette base de données étant utilisées par les moyens de Proxy pour établir ladite base de données en fonction de ladite analyse.

Egalement dans un mode de réalisation, au moins une de ladite pluralité d'applications logicielles est un téléphone logiciel et l'un des réseaux virtuels VLAN est dédié aux données de téléphonie sur IP émises par ledit téléphone logiciel.

L'invention concerne également un procédé conforme à la revendication 1.

Dans un mode de réalisation, ladite étape d'analyse comprend une étape de comparaison du protocole utilisé par lesdites données numériques avec une liste de protocoles prédéfinis à laquelle sont associées des données de marquage VLAN.

Particulièrement, ladite étape d'analyse comprend, en outre suite à une comparaison positive, une étape de récupération, dans les paquets desdites données, des ports de communication mis en oeuvre dans le protocole, et une étape d'enregistrement, dans une base de données, desdits ports de communication en association avec lesdites informations de marquage VLAN.

Dans un mode de réalisation particulier, ladite étape de marquage comprend une étape de comparaison du port de communication des données arrivant au marqueur VLAN avec les ports contenus dans ladite base de données et, si la comparaison est positive, une étape d'établissement des données d'identification de VLAN desdites données en fonction des informations de marquage associées auxdits ports et contenues dans ladite base de données à insérer dans la trame.

Particulièrement, si la comparaison est négative, la trame desdites données est établie avec des informations de marquage VLAN prédéfinies.

Egalement dans un mode de réalisation, ladite étape de marquage comprend une étape d'indication du numéro VLAN ID de VLAN auquel appartient lesdites données numériques.

Dans un mode de réalisation particulier, au moins l'une desdites applications est un téléphone logiciel et en ce que les données numériques issues dudit téléphone logiciel se voit marquées du même numéro VLAN ID de VLAN.

Egalement dans un mode de réalisation, ladite étape de marquage comprend une étape d'indication de paramètres de qualité de service nécessaires à la communication et au marquage de cette information dans la trame.

On comprendra mieux l'invention à l'aide de la description, faite ci-après à titre purement explicatif, d'un mode de réalisation de l'invention, en référence aux figures annexées où :
- la figure 1 représente un premier exemple de typologie de réseau mixte téléphone/data actuelle ;
- la figure 2 représente un second exemple de typologie de réseau téléphonie et data actuelle ;
- la figure 3 illustre une solution de différentiation des flux téléphonie/data selon la présente invention ; et
- la figure 4 représente un mode de réalisation de l'architecture logicielle de la présente invention.

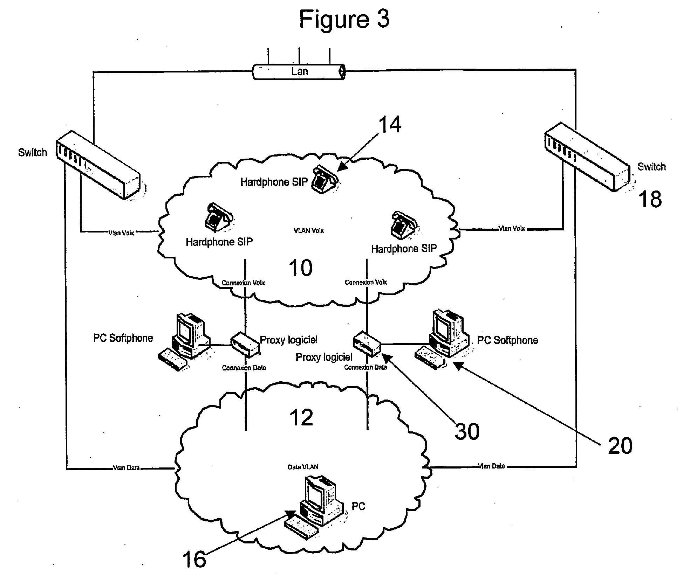

En référence à la figure 3, les ordinateurs 20 possédant les téléphones logiciels sont connectés aux deux VLAN 10 (VLAN voix) et 12 (VLAN data) au travers d'une seule carte réseau traditionnelle.

La figure 3 fournit une représentation simplifiée de la solution que propose l'invention, à savoir la présence d'un Proxy logiciel 30 pour chacun des postes informatiques PC 20 équipés d'un téléphone logiciel ou *softphone.* Ce Proxy logiciel ou serveur mandataire sert d'intermédiaire (ou encore de serveur cache) entre l'ordinateur et le réseau qui lui est extérieur. Grâce à ce Proxy 30 et différents éléments que nous verrons par la suite, le PC softphone 20 est relié, par une seule interface réseau, au VLAN 10 Voix et au VLAN 20 de données. Le proxy logiciel 30 est traditionnellement un composant logiciel du poste informatique 20 muni du téléphone logiciel.

La séparation des données numériques en des données voix et des données traditionnelles IP n'est utilisée ici qu'à titre d'exemple. Tout regroupement de données d'un même type (même protocole, même application source, ...) peut être envisagé et un grand nombre de VLAN coexistants peut être mis en oeuvre par la présente invention.

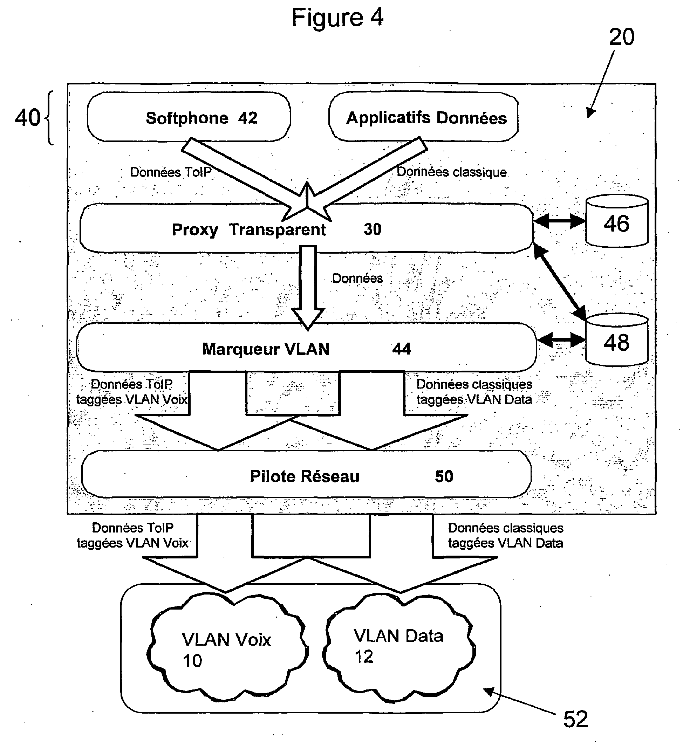

En référence à la figure 4, l'ordinateur 20 équipé d'un *softphone* possède plusieurs applications 40 dont le téléphone logiciel 42.

L'invention s'architecture sous la forme de deux modules complémentaires :
- le premier, Proxy logiciel 30 ou Proxy transparent (transparent parce qu'il ne modifie pas les données), sert à analyser la nature des flux sortants de la machine,
- le second, un marqueur VLAN 44 (ou *VLAN tagger*), affecte les identifiants d'appartenance au VLAN pour les paquets de données/voix, en fonction de l'analyse du Proxy logiciel 30.

Les deux modules de la solution travaillent en interaction totale mais à deux niveaux différents du flux de données numériques dans l'ordinateur 20. La partie Proxy transparent sert à différentier les flux voix et les flux de données en s'appuyant sur le décodage des protocoles applicatifs utilisés par la voix. Le résultat de cette différentiation est transmis au *Vlan Tagger* afin qu'il puisse correctement *tagger* (marquer) les données qui le traversent.

On entend par *tagger* ou marquer les données VLAN d'un flux de données, le fait de renseigner les balises ou tag présents dans la trame Ethernet pour la gestion des VLAN. Entre autres informations, pour la gestion des VLAN, cette trame Ethernet comprend un champ d'identification du VLAN auquel appartient le paquet de données (champ « VLAN ID » sur 12 bits), des champs pour indiquer la qualité de service (3 bits réservés pour la priorisation des paquets selon IEEE 802.1 P) , ...

### *** Le Proxy 30 ***

Les données Data et voix générées par les applications 40 (niveau 7 de la couche OSI) sont transmises au Proxy 30 pour être traitées comme des données numériques. Les données d'encapsulation ajoutées à chaque couche du modèle OSI transportent les informations des protocoles utilisés au niveau de ces couches.

Pour les applications de voix sur IP comme la téléphone, l'allocation des ports de communication UDP ou TCP est réalisée de façon dynamique entre les postes dialoguant et ces ports sont indiqués dans les données de signalisation de l'appel que s'échangent les deux postes. Ce sont ces informations de ports utilisés pour une communication téléphonique qui sont importantes.

Le Proxy transparent est une couche logicielle servant à déterminer quels sont les flux de données et les flux de téléphonie sur la machine. Pour cela, il décode les différents protocoles applicatifs présents entrant en jeu dans le protocole de téléphonie utilisé. Ce décodage se fait par la lecture des en-têtes ou *headers* qui sont spécifiques à chaque protocole et permettent donc l'identification certaine du protocole.

Le poste 20 dispose d'une base de données ou d'un fichier 46 dans lequel sont enregistrés tous les protocoles considérés comme étant des protocoles de téléphonie sur IP. On connaît, entre autres, les protocoles SIP, MGCP, H323, Megaco, ... Dans le présent exemple dans lequel les données voix sont diffusées sur un VLAN voix spécifique, cette base de données 46 associe donc cette liste de protocoles à ce VLAN voix (par exemple par un VLAN ID défini à « 1 »). Ainsi le Proxy 30 a connaissance des protocoles considérés comme étant de téléphonie sur IP et dont les données voix doivent être émises sur le VLAN voix de VLAN ID = 1.

Le Proxy 30 analyse ensuite les paquets de données en fonction de leur protocole. Pour les paquets de données dont le protocole fait partie de la liste 46, le Proxy analyse plus finement le contenu des paquets échangés pour déterminer quels sont les ports de communication de la machine qui sont alloués, éventuellement de façon dynamique, pour cette communication téléphonique. Les ports identifiés sont alors enregistrés dans une base de données 48.

Cette méthode n'est pas spécifique à un seul protocole mais est généralisable à tous les protocoles de téléphonie. Dans le cas de SIP (*Session Initiation Protocol.* Protocole spécifié dans la RFC 3261 de l'IETF ayant pour but de gérer les sessions pour permettre l'échange de voix et de vidéo sur Internet), il faudra décoder les parties :
- SIP pour la signalisation d'appel, et
- SDP (*Session Description Protocol.* Protocole permettant de définir le type de compression qui sera utilisé lors de la session de communication, les ports ainsi que tous les paramètres nécessaires à l'établissement d'une communication) pour le transport des données voix.

Ces données SIP et SDP seront émises sur le VLAN voix (VLAN ID = 1).

A titre d'exemple, lors de l'établissement d'un appel par un poste 20 muni d'un *softphone,* le paquet de signalisation SIP suivant est émis par le *softphone 42.*
SIP
Request
INVITE sip:bob@biloxi.com SIP/2.0
Content-Length:252
Via: SIP/2.0/UDP pc33.atlanta.com;branch=z9hG4bK776asdhds
Max-Forwards: 70
To: Bob <sip:bob@biloxi.com>
From: Alice <sip:alice@atlanta.com>;tag=1928301774
Call-ID: a84b4c76e66710@pc33.atlanta.com
CSeq: 314159 INVITE
Contact: <sip:alice@pc33.atlanta.com>
Content-Type: application/sdp
Content-Length: 142
Allow:INVITE, ACK, BYE, CANCEL, REFER
Supported:timer

Au niveau de la couche OSI 5, le Proxy 30 identifie un paquet de données SIP par son entête.

Le Proxy identifie le port de communication pour ce protocole SIP dans son en-tête (généralement ce port de communication SIP est fixe à 5600). Puis durant, l'établissement de la connexion, un certain nombre de paquets SIP vont transiter entre le poste 20 et un téléphone distant, à l'intérieur desquels sont indiqués les éventuels ports de communication qui seront utilisés pour la diffusion des données voix par le protocole SDP. Une fois le paquet SIP identifié, celui-ci est analysé au niveau 7 de la couche OSI, c'est-à-dire que son contenu est analysé, suivant le protocole découvert afin d'en extraire les ports choisis pour la communication. L'ensemble des paquets SIP lors de l'initialisation de l'appel sont analysés : messages INVITE, TRYING, OK, ACKNOWLEDGE, ...

Ces ports identifiés sont enregistrés dans la base de données 48.

De façon symétrique, à la fin de la session caractérisée par un échange de paquets SIP appropriés (messages BYE, CANCEL, ...), le Proxy 30 retire, de la base 48, les ports utilisés pour la session puisqu'ils sont de nouveau libres d'affectation.

Ainsi, à un instant t, par le décodage de ces protocoles, la liste 48 liste les différents ports de communication de la machine qui entrent en jeu dans les communications téléphoniques en cours de ce poste. Cette liste de ports contient tous les ports devant être marqués comme appartenant au VLAN Voix, par exemple par un VLAN ID = 1.

Il est à noter que cette analyse peut être accompagnée d'un dialogue applicatif spécifique dans le cas du support de protocoles propriétaires. Le Proxy sollicite les applications 40 voix pour connaître les ports de communications utilisés par les protocoles propriétaires mis en oeuvre.

### *** Le marqueur VLAN ***

Le module logiciel marqueur VLAN 44 permet de réaliser le marquage des paquets comme appartenant à un VLAN spécifique en fonction des ports mémorisés dans la base de données 48.

Le marqueur VLAN 44 est positionné au dessus des drivers (pilotes) 50 de l'unique carte réseau du poste 20, c'est-à-dire au niveau 2 de la couche OSI (couche liaison de données). Ce positionnement est avantageux puisqu'il permet d'utiliser un même marqueur VLAN quelle que soit la carte réseau utilisée sans avoir à développer des nouveaux pilotes de carte réseau. Dans le processus normal de transmission des données depuis les applications vers le réseau, le marqueur VLAN 44 reçoit les données numériques issues du Proxy 30, ces données étant en paquets IP (suivant les différentes couches OSI 6 à 3). Le marqueur VLAN 44 décode les couches OSI 3 et 4 des données reçues (il décode les informations d'encapsulation IP et UDP ou TCP) afin d'en extraire les ports de communication utilisés. En fonction de ces ports et de leur présence dans la liste 48, le marqueur via la carte réseau et ses pilotes 50 procède à l'ajout des champs VLAN dans la trame de données à transmettre. Cette opération est réalisée au niveau de la couche 2 du modèle OSI, c'est-à-dire la couche liaison de données.

L'écriture des *tags* (champs, balises) de VLAN permet d'envoyer les flux déterminés par le Proxy 30 transparent sur le VLAN correspondant à son type (données ou voix). Un identifiant est affecté pour chacun des VLANS supportés, par exemple l'identifiant « 1» pour le VLAN voix 10 et l'identifiant « 2 » pour le VLAN données 12.

En fonction de la liste 48 des ports fournis par le Proxy transparent 30 comme étant les ports de voix et des ports extraits des couches OSI 3 et 4, les paquets émis sur ces ports sont marqués avec un VLAN ID = 1, c'est-à-dire comme appartenant au réseau voix.

Si le port d'émission n'est pas dans la liste 48 des ports affectés pour le réseau voix, alors le marqueur 44 affecte l'identifiant « 2 » du VLAN Data 12 dans le champ VLAN ID des paquets émis.

Dans la description précédente, une description de la méthode d'émission d'une trame sur le VLAN a été décrite. Lors de l'établissement d'une session, un échange de messages SIP se déroule. Des messages sont émis depuis une machine distante initiatrice des échanges et arrivent donc vers la machine réceptrice depuis le VLAN « voix ». Ces trames ne posent pas de problème particulier pour cette machine réceptrice puisqu'il suffit de les interpréter comme des trames classiques auxquelles est déjà affecté un numéro d'identification VLAN : toute réponse à ce message implique une émission de la réponse sur le même VLAN ; éventuellement, un enregistrement du port utilisé dans la liste 48 peut être envisagé.

On pourra donc traiter par cette méthode aussi bien les sessions initialisés par la machine que celles initialisés par le correspondant externe.

Il est à noter que l'invention peut s'appliquer pour un nombre de VLAN supérieur à deux, ainsi que pour la mise en place d'une qualité de service (en fonction de protocoles) en utilisant les champs de la trame définis à cet effet (voir IEEE 802.1 P, par exemple).

L'invention peut également être mise en oeuvre par des téléphones portables ne disposant que d'une seule interface réseau, par exemple pour gérer des téléphones portables évolués (PDA, Smartphone, ...) qui utilisent le réseau Wifi de l'entreprise lorsque l'on se trouve dans la zone de couverture Wifi afin de permettre un accès au réseau data et voix de l'entreprise depuis le téléphone tout en gardant la séparation des réseaux de l'entreprise.

## Revendications

1. Procédé de marquage VLAN de données numériques transmises sous forme de trames comprenant au moins des données d'identification VLAN, par une unique interface réseau (50) d'un ordinateur (20) et selon au moins un protocole applicatif, sur au moins deux réseaux virtuels VLAN (10, 12) d'un même réseau numérique physique (52), ces données provenant d'une pluralité d'applications logicielles (40) exécutées sur ledit ordinateur (20), le procédé comprenant les étapes successives suivantes :
- une étape d'analyse desdites données numériques et de leur protocole par des moyens logiciels de Proxy (30) présents sur l'ordinateur (20),
- une étape de marquage VLAN dans lesdites trames par un marqueur VLAN logiciel (44) présent sur l'ordinateur, ledit marquage étant fonction du résultat de ladite analyse et indiquant les données d'identification VLAN du VLAN sur lequel les données numériques doivent être transmises.

2. Procédé selon la revendication 1, **caractérisé en ce que** ladite étape d'analyse comprend une étape de comparaison du protocole utilisé par lesdites données numériques avec une liste (46) de protocoles prédéfinis à laquelle sont associées des données de marquage VLAN.

3. Procédé selon la revendication précédente, **caractérisé en ce que** ladite étape d'analyse comprend, en outre suite à une comparaison positive, une étape de récupération, dans les paquets desdites données, des ports de communication mis en oeuvre dans le protocole, et une étape d'enregistrement, dans une base de données (48), desdits ports de communication en association avec lesdites informations de marquage VLAN.

4. Procédé selon la revendication précédente, **caractérisé en ce que** ladite étape de marquage comprend une étape de comparaison du port de communication des données arrivant au marqueur VLAN avec les ports contenus dans ladite base de données (48) et, si la comparaison est positive, une étape d'établissement des données d'identification de VLAN desdites données en fonction des informations de marquage associées auxdits ports et contenues dans ladite base de données (48) à insérer dans la trame.

5. Procédé selon la revendication précédente, **caractérisé en ce que**, si la comparaison est négative, la trame desdites données est établie avec des informations de marquage VLAN prédéfinies.

6. Procédé selon la revendication 1, **caractérisé en ce que** ladite étape de marquage comprend une étape d'indication du numéro VLAN ID de VLAN auquel appartiennent lesdites données numériques.

7. Procédé selon la revendication précédente, **caractérisé en ce qu'**au moins l'une desdites applications (40) est un téléphone logiciel (42) et **en ce que** les données numériques issues dudit téléphone logiciel se voient marquées du même numéro VLAN ID de VLAN.

8. Procédé selon la revendication 1, **caractérisé en ce que** ladite étape de marquage comprend une étape d'indication de paramètres de qualité de service nécessaires à la communication et au marquage de cette information dans la trame.

9. Procédé de transmission de données sur un réseau physique au travers d'une seule interface réseau (50), ledit réseau physique (52) comprenant au moins deux réseaux virtuels VLAN (10, 12), le procédé comprenant une étape marquage de données selon l'une quelconque des revendications 1 à 8.

10. Système pour la mise en oeuvre du procédé de marquage selon les revendications 1 à 8, **caractérisée en ce qu'**il comprend un ordinateur (20) comprenant une unique interface réseau (50) pour la transmission desdites trames, et **en ce que** l'ordinateur (20) comprend en outre:
- des moyens logiciels de Proxy (30) agencés pour recevoir lesdites données numériques d'une pluralité d'applications logicielles (40) exécutées sur ledit ordinateur (50), lesdits moyens de Proxy étant aptes à analyser lesdites données numériques et leur protocole,
- des moyens logiciels de marquage VLAN (44) agencés pour indiquer, dans les trames et en fonction du résultat de ladite analyse des moyens de Proxy, les données d'identification VLAN du VLAN (10, 12) sur lequel les données numériques doivent être transmises.

11. Système selon la revendication 10, **caractérisée en ce qu'**il comprend, en outre, une base de données (48) associant des données de marquage VLAN à des ports réseau de communication, cette base de données étant modifiée par les moyens de Proxy (30) en fonction de ladite analyse et étant consultée par les moyens de marquage (44) pour déterminer les informations de marquage desdites données numériques.

12. Système selon la revendication précédente, **caractérisée en ce qu'**il comprend, en outre, une base de données (46) associant des protocoles et des informations VLAN de marquage, cette base de données étant utilisée par les moyens de Proxy (30) pour établir ladite base de données (48) en fonction de ladite analyse.

13. Système selon la revendication 10, **caractérisée en ce qu'**au moins une de ladite pluralité d'applications logicielles (40) est un téléphone logiciel (42) et **en ce que** l'un des réseaux virtuels VLAN (10, 12) est dédié aux données de téléphonie sur IP émises par ledit téléphone logiciel.

## Claims

1. A method for the VLAN tagging of digital data transmitted in the form of frames comprising at least VLAN identification data by means of a single network interface (50) of a computer (20) and according to at least one application protocol, on at least two VLAN virtual networks (10, 12) of a same physical digital network (52), this data coming from a plurality of software applications (40) run on said computer (20), the method comprising the following consecutive steps:
- a step for analyzing said digital data and its protocol using Proxy software means (30) present on the computer (20),
- a VLAN tagging step in said frames using a software VLAN tagger (44) present on the computer, said tagging depending on the result of said analysis and indicating the VLAN identification data of the VLAN on which the digital data must be transmitted.

2. The method according to claim 1, **characterized in that** said analysis step comprises a step for comparing the protocol used by said digital data with a list (46) of predefined protocols with which VLAN tagging data is associated.

3. The method according to the preceding claim, **characterized in that** said analysis step comprises, in addition after a positive comparison, a step for recovering, in said data packages, communication ports used in the protocol, and a step for recording, in a database (48), said communication ports associated with said VLAN tagging information.

4. The method according to the preceding claim, **characterized in that** said tagging step comprises a step for comparing the communication port of the data arriving at the VLAN tagger with the ports contained in said database (48) and, if the comparison is positive, a step for establishing VLAN identification data for said data according to the tagging information associated with said ports and contained in said database (48) to be inserted into the frame.

5. The method according to the preceding claim, **characterized in that**, if the comparison is negative, the frame of said data is established with predefined VLAN tagging information.

6. The method according to claim 1, **characterized in that** said tagging step comprises a step for indicating the VLAN ID number of the VLAN to which said digital information belongs.

7. The method according to the preceding claim, **characterized in that** at least one of said applications (40) is a softphone (42) and **in that** the digital data coming from said softphone is tagged with the same VLAN ID number for the VLAN.

8. The method according to claim 1, **characterized in that** said tagging step comprises a step for indicating service quality parameters necessary for the communication and tagging of said information in the frame.

9. A method for transmitting data on a physical network through a single network interface (50), said physical network (52) comprising at least two VLAN virtual networks (10, 12), the method comprising a data tagging step according to any one of claims 1 to 8.

10. A system for implementing the tagging method according to claims 1 to 8, **characterized in that** it comprises a computer (20) comprising a single network interface (50) for transmitting said frames, and **in that** the computer (20) also comprises:
- Proxy software means (30) arranged to receive said digital data from a plurality of software applications (40) run on said computer (50), said Proxy means being able to analyze said digital data and its protocol,
- VLAN tagging software means (44) arranged to indicate, in the frames and according to the results of said analysis by the Proxy means, the VLAN identification data of the VLAN (10, 12) on which the digital data must be transmitted.

11. The system according to claim 10, **characterized in that** it also comprises a database (48) associating VLAN tagging data with communication network ports, this database being modified by the Proxy means (30) as a function of said analysis and being viewed by the tagging means (44) to determine the tagging information for said digital data.

12. the system according to the preceding claim, **characterized in that** it also comprises a database (46) associating protocols and VLAN tagging information, this database being used by the Proxy means (30) to establish said database (48) as a function of said analysis.

13. the system according to claim 10, **characterized in that** at least one of said plurality of software applications (40) is a softphone (42) and **in that** one of the VLAN virtual networks (10, 12) is dedicated to IP telephony data sent by said softphone.

## Patentansprüche

1. Verfahren zum VLAN-Tagging digitaler Daten, die in Form von Frames übertragen werden, die mindestens VLAN-Identifikationsdaten umfassen, durch eine einzige Netzwerkschnittstelle (50) eines Rechners (20) und gemäß mindestens einem Anwendungsprotokoll über mindestens zwei virtuellen VLAN-Netzwerke (10, 12) eines selben physischen digitalen Netzwerks (52), wobei diese Daten von einer Vielzahl von Softwareanwendungen (40) stammen, die auf dem Rechner (20) ausgeführt werden, wobei das Verfahren die folgenden aufeinanderfolgenden Schritte umfasst:
- einen Analyseschritt der digitalen Daten und ihres Protokolls durch auf dem Rechner (20) vorhandene Proxy-Softwaremittel (30),
- einen Schritt des VLAN-Taggings in den Frames durch einen auf dem Rechner vorhandenen Software-VLAN-Tagger (44), wobei das Tagging Funktion des Ergebnisses der Analyse ist und die VLAN-Identifikationsdaten des VLAN angibt, über das die digitalen Daten zu übertragen sind.

2. Verfahren nach Anspruch 1, **dadurch gekennzeichnet, dass** der Analyseschritt einen Vergleichsschritt des von den digitalen Daten verwendeten Protokolls mit einer Liste (46) vordefinierter Protokolle umfasst, der VLAN-Taggingdaten zugeordnet sind.

3. Verfahren nach vorangehendem Anspruch, **dadurch gekennzeichnet, dass** der Analyseschritt weiterhin nach einem positiven Vergleich einen Schritt der Restaurierung, in den Paketen der Daten, der im Protokoll umgesetzten Kommunikationsports umfasst und einen Registrierungsschritt der Kommunikationsports in Verbindung mit den VLAN-Tagginginformationen in einer Datenbank (48).

4. Verfahren nach vorangehendem Anspruch, **dadurch gekennzeichnet, dass** der Taggingschritt einen Vergleichsschritt des Kommunikationsports der Daten umfasst, die am VLAN-Tagger ankommen, mit den Ports, die in der Datenbank (48) enthalten sind, und, wenn der Vergleich positiv ist, einen Schritt der Erstellung der VLAN-Identifikationsdaten der Daten in Abhängigkeit der den Ports zugeordneten Tagginginformationen, die in der in den Frame einzufügenden Datenbank (48) vorhanden sind.

5. Verfahren nach vorangehendem Anspruch, **dadurch gekennzeichnet, dass**, wenn der Vergleich negativ ist, der Frame der Daten mit vordefinierten VLAN-Tagginginformationen erstellt wird.

6. Verfahren nach Anspruch 1, **dadurch gekennzeichnet, dass** der Taggingschritt einen Anzeigeschritt der VLAN-ID-Nummer des VLAN umfasst, zu dem die digitalen Daten gehören.

7. Verfahren nach vorangehendem Anspruch, **dadurch gekennzeichnet, dass** mindestens eine der Anwendungen (40) ein Softwaretelefon (42) ist und dass die von dem Softwaretelefon ausgehenden Daten mit derselben VLAN-ID-Nummer des VLAN getaggt werden.

8. Verfahren nach Anspruch 1, **dadurch gekennzeichnet, dass** der Taggingschritt einen Anzeigeschritt von Servicequalitätsparametern umfasst, die für die Kommunikation und das Tagging dieser Information in dem Frame notwendig sind.

9. Verfahren zur Übertragung von Daten über ein physisches Netzwerk mittels einer einzigen Netzwerkschnittstelle (50), wobei das physische Netzwerk (52) mindestens zwei virtuelle VLAN-Netzwerke (10, 12) umfasst, wobei das Verfahren einen Taggingschritt von Daten nach einem der Ansprüche 1 bis 8 umfasst.

10. System zur Umsetzung des Taggingverfahrens nach den Ansprüchen 1 bis 8, **dadurch gekennzeichnet, dass** es einen Rechner (20) umfasst, der eine einzige Netzwerk-Schnittstelle (50) für die Übertragung der Frames umfasst, und dass der Rechner (20) weiterhin umfasst:
- Proxy-Softwaremittel (30), die ausgebildet sind, um die digitalen Daten von einer Vielzahl von Softwareanwendungen (40) zu empfangen, die auf dem Rechner (50) ausgeführt werden, wobei die Proxy-Mittel imstande sind, die digitalen Daten und ihr Protokoll zu analysieren,
- VLAN-Tagging-Softwaremittel (44), die ausgebildet sind, um in den Frames und in Abhängigkeit vom Ergebnis der Analyse der Proxymittel die VLAN-Identifikationsdaten des VLAN (10, 12) anzuzeigen, über das die digitalen Daten übertragen werden müssen.

11. System nach Anspruch 10, **dadurch gekennzeichnet, dass** es weiterhin eine Datenbank (48) umfasst, die VLAN-Taggingdaten Kommunikationsschnittstellenports zuordnet, wobei diese Datenbank von den Proxymitteln (30) in Abhängigkeit von der Analyse geändert wird und von den Taggingmitteln (44) abgefragt wird, um die Tagginginformationen der digitalen Daten zu bestimmen.

12. System nach vorangehendem Anspruch, **dadurch gekennzeichnet, dass** es weiterhin eine Datenbank (46) umfasst, die Protokolle und VLAN-Tagginginformationen kombiniert, wobei diese Datenbank von den Proxymitteln (30) verwendet wird, um die Datenbank (48) in Abhängigkeit von der Analyse zu erstellen.

13. System nach Anspruch 10, **dadurch gekennzeichnet, dass** mindestens eine der Vielzahl von Softwareanwendungen (40) ein Softwaretelefon (42) ist und dass eines der virtuellen VLAN-Netzwerke (10, 12) auf Telefoniedaten über IP spezialisiert ist, die von dem Softwaretelefon gesendet werden.
